# EUROPEAN PATENT SPECIFICATION

(11) **EP 2 955 617 B1**
(45) Date of publication and mention of the grant of the patent: **13.12.2017**
(21) Application number: 13874801.7
(22) Date of filing: 13.09.2013
(51) Int. Cl.: G06F 3/0484, G06F 21/31

(54) **METHOD AND DEVICE FOR UNLOCKING SCREEN, AND TERMINAL**
VERFAHREN UND VORRICHTUNG ZUR ENTSPERRUNG EINES BILDSCHIRMS UND ENDGERÄT
PROCÉDÉ ET DISPOSITIF POUR DÉVERROUILLER UN ÉCRAN, ET TERMINAL

(30) Priority: 06.02.2013 CN 201310048417
(43) Date of publication of application: 16.12.2015
(73) Proprietor: Xiaomi Inc., Beijing 100085 (CN)
(72) Inventor: GAO, Chengxing, Beijing 100085 (CN); LI, Weixing, Beijing 100085 (CN); PENG, Tao, Beijing 100085 (CN)
(74) Representative: Delumeau, François Guy
(86) International application number: PCT/CN2013/083500
(87) International publication number: WO 2014/121612

(56) References cited:
- WO-A1-2012/096075
- CN-A- 102 455 839
- CN-A- 102 455 839
- CN-A- 102 567 680
- CN-A- 103 092 484
- CN-B- 101 616 500
- JP-A- 2006 155 382
- TW-A- 201 137 658
- US-A1- 2012 304 302

## Description

### TECHNICAL FIELD

The present application relates to a screen control field, and more particular to a method and device for unlocking a screen and a terminal.

### BACKGROUND

With the development of technology, mobile phones have undergone dramatic changes both in functions and appearance. In particular, smart phones are well known and used by more and more people in recent years.

Although the weight of the smart phone comes to be lighter, the smart phone possesses more abundant functions which may include functions of a general mobile phone, such as calling and sending message, as well as some additional functions such as browsing web, editing document, and shooting photograph/video, etc. As the functions of smart phones become more abundant, the safety thereof increasingly gets much attention.

Document JP2006155382 provides a technique which can check the validity of input character serially when a password is not memorized correctly and where the risk of password leakage is low.

Many kinds of smart phones have a built-in password in order to prevent personal information in the phones from being found by those unrelated person. In such a case, a user has to correctly enter a preset password to unlock screen when the screen of smart phones is lighted up.

Current commonly used passwords include number(s) and/or letter(s), which can be classified into a fixed-length password and an unfixed-length password. The fixed-length password refers to a password, a length of which must keep consistence with a specified length. The unfixed-length password refers to a password with an unfixed length, and thus the user may set the password of an arbitrary length within a specified maximum length range.

As for the fixed-length password, a screen may be unlocked in the following manner: a preset password is stored in advance in a smart phone; when it is detected that a password entered by a user reaches a prescribed length of password, it is determined whether the password entered by the user matches the preset password; and the screen is unlocked if it is determined that they match with each other.

As for the unfixed-length password, a screen may be unlocked in the following manner: a preset password is stored in advance in a smart phone; when it is detected that a password is entered by a user and an unlock event is triggered, it is determined whether the password input by the user matches the preset password; and the screen is unlocked if it is determined that they match with each other. The unlock event herein may refer to an "UNLOCK" button on the screen, and when the "UNLOCK" button is clicked by the user, the smart phone may acknowledge that a password is already entered by the user so that a determination operation may be processed subsequently.

Accordingly, the user has to manually trigger the unlock event in addition to entering the password in those cases of using an unfixed-length password, which results in complicated operation.

### SUMMARY

The invention provides a method and device for unlocking a screen and a terminal as defined in the appended claims, by which a user can directly unlock a screen after a password is entered correctly without triggering any unlock event, in the case of using an unfixed-length password.

Parts of advantageous effects provided by the technical solutions of the present disclosure may include: aiming at the features of unfixed-length password, every time the user performs an entering operation in an entering location of an unlock password, it is determined by a manner of comparison whether all the characters in the entering location of the unlock password match a password preset by the user, and the screen may be unlocked if they match; thus, the screen can be unlocked directly after the password is entered correctly by the user without any unlock event being triggered (e.g. clicking an "UNLOCK" button on the screen after the password is entered by the user), so that the user's operation is simplified. It should be understood that the descriptions both in general above and in details hereinafter are for illustrative purpose only, rather than to limit the present disclosure.

### BRIEF DESCRIPTION OF THE DRAWINGS

In order to describe the technical solution in the present disclosure more clearly, the following gives a simple introduction of appending drawings required for the description of embodiments. Obviously, the appending drawings in the following description are only examples of the present disclosure, and those skilled in the art may obtain other drawings based on these ones without making any creative work.

The ninth embodiment is according to the invention. The first to eighth embodiments may exemplify parts of the invention.
FIG. 1 is an exemplary flow chart showing a method for unlocking a screen in a first embodiment of the present disclosure;
FIG. 2 is an exemplary schematic diagram showing a screen unlock interface in the first embodiment of the present disclosure;
FIG. 3 is an exemplary flow chart showing a method for unlocking a screen in a second embodiment of the present disclosure;
FIG. 4 is an exemplary flow chart showing a method for unlocking a screen in a third embodiment of the present disclosure;
FIG. 5 is an exemplary flow chart showing a first method for counting the number of times the password is entered incorrectly in a fourth embodiment of the present disclosure;
FIG. 6 is an exemplary flow chart showing a second method for counting the number of times the password is entered incorrectly in the fourth embodiment of the present disclosure;
FIG. 7 is an exemplary block diagram showing a device for unlocking a screen in a fifth embodiment of the present disclosure;
FIG. 8 is an exemplary block diagram showing a device for unlocking a screen in a sixth embodiment of the present disclosure;
FIG. 9 is an exemplary block diagram showing a device for unlocking a screen in a seventh embodiment of the present disclosure;
FIG. 10 is an exemplary block diagram showing an exemplary block diagram further included in the devices in the fifth to seventh embodiments of the present disclosure;
FIG. 11 is a block diagram showing an exemplary structure further included by the devices in the fifth to seventh embodiments of the present disclosure;
FIG. 12 is an exemplary flow chart showing a method for unlocking a screen in a ninth embodiment of the present disclosure;
FIG. 13 is an exemplary block diagram showing a device for unlocking a screen in the ninth embodiment of the present disclosure;
FIG. 14 is an exemplary block diagram showing a second comparison unit in the ninth embodiment of the present disclosure;

Some specific embodiments of the present disclosure are illustrated through the above mentioned drawings, followed by description in more detail hereinafter. Such drawings and description are provided to explain the concept of the present disclosure for those skilled in the art with reference to particular embodiments, rather than to limit the scope of the disclosed conception in any manner.

### DESCRIPTION OF THE EMBODIMENTS

Technical solutions in the embodiments of the present disclosure will be described below clearly and completely with reference to the appending drawings in the embodiments of the present disclosure. The ninth embodiment is according to the invention. The first to eighth embodiments may exemplify parts of the invention.

### The first embodiment

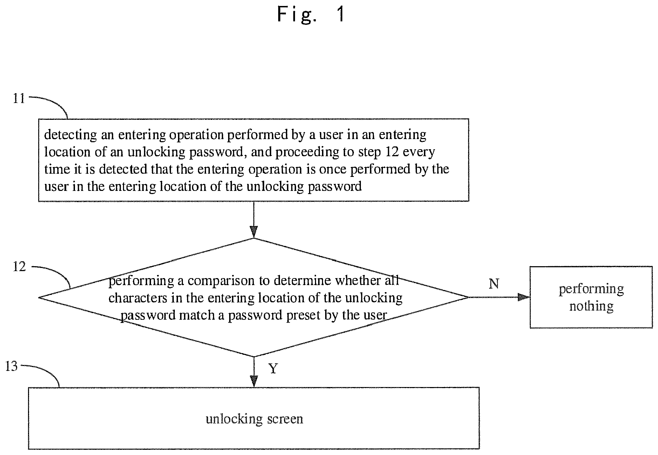

FIG. 1 is an exemplary flow chart showing a method for unlocking a screen in the first embodiment of the present disclosure. The method comprises:
Step 11: detecting an entering operation performed by a user in an entering location of an unlock password, and proceeding to step 12 every time it is detected that the entering operation is once performed by the user in the entering location of the unlock password.
Step 12: performing a comparison to determine whether all characters in the entering location of the unlock password match a password preset by the user, and proceeding to step 13 if it is determined that all characters in the entering location of the unlock password match the password preset by the user, otherwise performing nothing.
Step 13: unlocking the screen.

Accordingly, in the method for unlocking a screen in the first embodiment of the present disclosure, aiming at features of an unfixed-length password, every time a user performs an entering operation in an entering location of an unlock password, that is, every time the user enters a character in the entering location of the unlock password, the comparison is performed to determine whether all the characters in the entering location of the unlock password match a password preset by the user, and the screen may be unlocked if they match. On one hand, the screen can be unlocked directly after the password is entered correctly by the user without any unlock event being triggered (e.g. clicking an "UNLOCK" button on the screen after the password is entered by the user), so that the user's operation is simplified. On the other hand, only the password set by the user rather than the length of the password is required to be stored in advance.

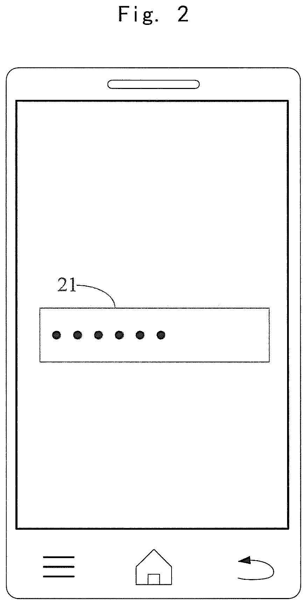

As shown in FIG. 2, it illustratively shows an exemplary schematic diagram of a screen unlock interface in the first embodiment of the present disclosure. On this screen unlock interface, there is only an unlock password entering frame 21 without any "UNLOCK" button. Assuming the length of a password preset by the user is 6 digits, the screen may be unlocked directly after a 6-digit password is entered by the user correctly in the unlock password entering frame 21.

### The second embodiment

In the second embodiment, a password preset by a user is encrypted in advance using a preset encryption algorithm so as to obtain a second ciphertext.

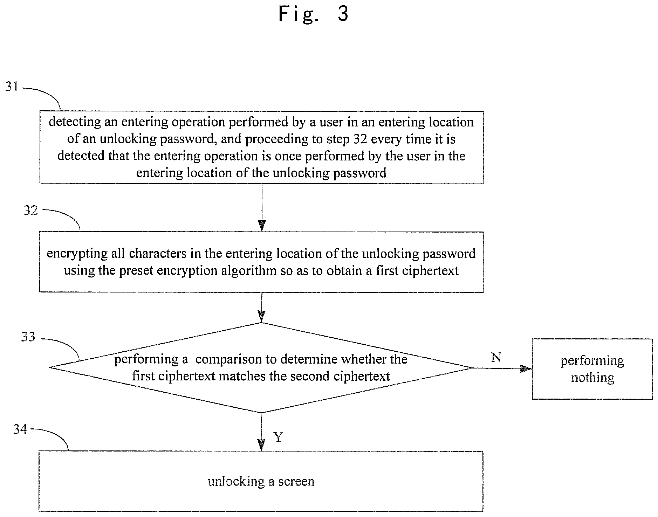

FIG. 3 an exemplary flow chart illustratively showing a method for unlocking a screen in the second embodiment of the present disclosure. The method comprises:
Step 31: detecting an entering operation performed by a user in an entering location of an unlock password, and proceeding to step 32 every time it is detected that the entering operation is once performed by the user in the entering location of the unlock password.
Step 32: encrypting all characters in the entering location of the unlock password using the preset encryption algorithm so as to obtain a first ciphertext.
Step 33: performing a comparison to determine whether the first ciphertext matches the second ciphertext, and proceeding to step 34 if they match, otherwise performing nothing.
Step 34: unlocking the screen.

Accordingly, the second embodiment based on the first embodiment further encrypts the password preset by the user in advance using a preset encryption algorithm so as to obtain the second ciphertext, and every time it is detected that an entering operation is once performed by the user in the entering location of the unlock password, all the characters in the entering location of the unlock password are encrypted using the preset encryption algorithm so as to obtain the first ciphertext. Then the screen will be unlocked if the first ciphertext matches the second ciphertext, and thus the safety of password may be further improved.

### The third embodiment

In the third embodiment, the password preset by a user is encrypted in advance using a preset encryption algorithm so as to obtain a ciphertext to be stored.

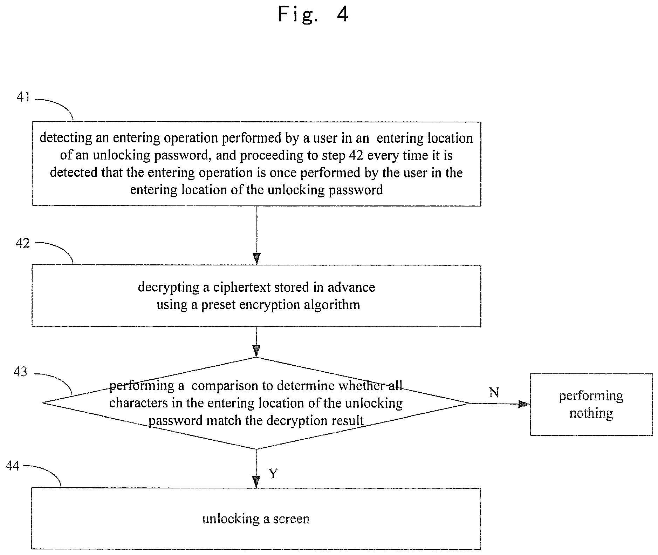

FIG. 4 is an exemplary flow chart illustratively showing a method for unlocking a screen in the third embodiment of the present disclosure. The method comprises:
Step 41: detecting an entering operation performed by a user in an entering location of an unlock password, and proceeding to step 42 every time it is detected that the entering operation is once performed by the user in the entering location of the unlock password.
Step 42: decrypting the ciphertext stored in advance using the preset encryption algorithm.
Step 43: performing a comparison to determine whether all characters in the entering location of the unlock password match the decryption result, and proceeding to step 44 if it is determined that all the characters in the entering location of the unlock password match the decryption result, otherwise performing nothing.
Step 44: unlocking the screen.

Accordingly, the present third embodiment based on the first embodiment further encrypts the password preset by the user in advance using a preset encryption algorithm so as to obtain and store a ciphertext, and furthermore, the stored ciphertext is decrypted using the preset encryption algorithm every time it is detected that an entering operation is once performed by the user in the entering location of the unlock password. Then the screen will be unlocked if all the characters in the entering location of the unlock password match the decryption result, and thus the safety of password may be further improved.

### The fourth embodiment

In such a case that an unlock event is provided for a user, for example, if an "UNLOCK" button is provided on screen, a password entering error may be counted once when a user clicks the "UNLOCK" button and the characters entered by the user fail to match the preset password. However, such an embodiment cannot be implemented if any unlock event is not provided for the user.

On the basis of the first to third embodiments described above, the method provided by the fourth embodiment of the present disclosure further includes a method for counting the number of times the password is entered incorrectly.

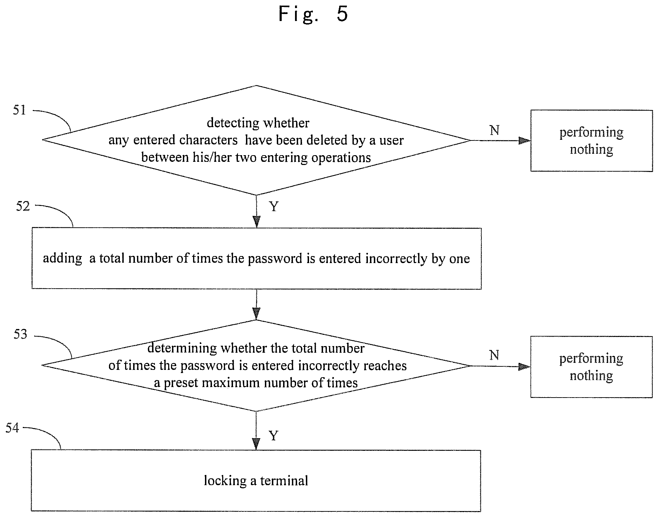

FIG. 5 is an exemplary flow chart showing a first method for counting the number of times the password is entered incorrectly in the fourth embodiment of the present disclosure. The method comprises:
Step 51: detecting whether any entered characters have been deleted by a user between his/her two entering operations, and proceeding to step 52 if it is detected that any entered characters have been deleted by the user between his/her two entering operations, otherwise performing nothing.
Step 52: adding a total number of times the password is entered incorrectly by one.
Step 53: determining whether the total number of times the password is entered incorrectly reaches the preset maximum number of times, and proceeding to step 54 if it is determined that the total number of times the password is entered incorrectly reaches the preset maximum number of times, otherwise performing nothing.
Step 54: locking the terminal.

Accordingly, in the first method for counting the number of times the password is entered incorrectly in the fourth embodiment of the present disclosure, if any entered characters have been deleted by a user between his/her two entering operations, regardless of how many times the deletion operations are performed, the deletion operations will be considered as a case that the number of times the password is entered incorrectly is one. Still taking the unlock interface shown in Fig. 2 for an example, assuming the length of password preset by user is 6 digits, a user may delete one or more entered character(s) and re-enter new one(s) if the screen is not unlocked after 6-digit characters are entered. For example, the user may delete 3 characters and then re-enter the 4th to 6th characters, and such a deleting operation will be considered as a case that the number of times the password is entered incorrectly is one. As another example, the user may delete 6 characters and then re-enter the 1st to 6th characters, and such a deleting operation will also be considered as a case that the number of times the password is entered incorrectly is one.

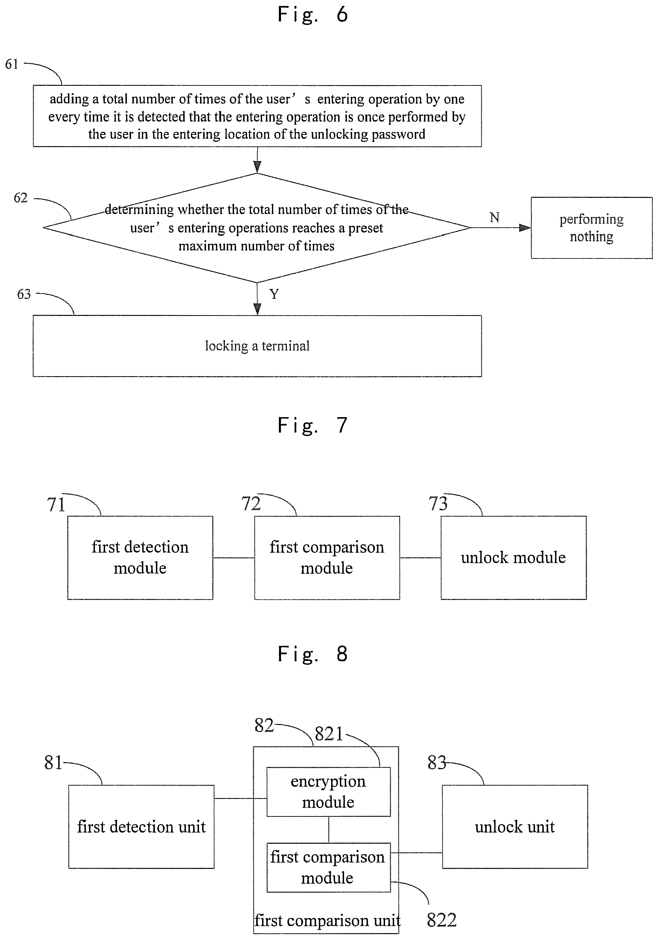

FIG. 6 is an exemplary flow chart showing a second method for counting the number of times the password is entered incorrectly in the fourth embodiment of the present disclosure. The method comprises:
Step 61: adding a total number of times of the user's entering operations by one every time it is detected that an entering operation is once performed by the user in the entering location of an unlock password.
Step 62: detecting whether the total number of times of the user's entering operations reaches the preset maximum number of times, and proceeding to step 63 if the total number of times of the user's entering operations reaches the preset maximum number of times, otherwise performing nothing.
Step 63: locking the terminal.

Accordingly, in the second method for counting the number of times the password is entered incorrectly in the fourth embodiment of the present disclosure, the maximum number of times is set in advance and the terminal will be locked if the total number of times of the entering operation of the user reaches the maximum number of times. That is, the total number of times of the entering operation of the user may be added by one every time one character is entered by the user. Taking the unlock interface shown in Fig. 2 for an example, assuming that the 6-digit characters in the unlock password entering frame 21 consist of characters re-entered by a user after another 6-digit characters were entered by the user for the first time without unlocking the screen and then are deleted. In such a case, the total number of times of the entering operation of the user may be 12.

The maximum number of times may be preset arbitrarily. Alternatively, the maximum number of times may be preset to be equal to a value obtained by subtracting one from an integral multiple of a maximum specified password length. Taking the android OS of a smart phone for an example, the specified length of password ranges from 4 to 17 digits, that is, a user may set a password containing 4 to 17 characters. Thus, the maximum specified password length is 17, then the maximum number of times mentioned above may be set to 50, and the terminal may be locked when the total number of times of the entering operation of the user reaches 50.

### The fifth embodiment

FIG. 7 is an exemplary block diagram showing a device for unlocking a screen in the fifth embodiment of the present disclosure. The device comprises the following units:
a first detection unit 71 configured to detect an entering operation performed by a user in an entering location of an unlock password, and supply a first comparison unit 72 with all characters in the entering location of the unlock password every time it is detected that the entering operation is once performed by the user in the entering location for unlock password.
the first comparison unit 72 configured to perform a comparison to determine whether all the characters in the entering location of the unlock password match a password preset by the user, and trigger an unlock unit 73 to perform an operation if all the characters in the entering location of the unlock password match the password preset by the user.
the unlock unit 73 configured to unlock the screen.

Accordingly, in the screen unlocking device in the fifth embodiment of the present disclosure, aiming at features of an unfixed-length password, every time a user perform an entering operation in the entering location of an unlock password, it is determined by comparison whether all the characters in the entering location of the unlock password match the password preset by the user, and the screen may be unlocked if they match. On one hand, the screen can be unlocked directly after the password is entered correctly by user without any unlock event being triggered (e.g. clicking an "UNLOCK" button on the screen after the password is entered by user), so that the user's operation is simplified. On the other hand, only the password set by the user rather than the length of the password is required to be stored in advance.

### The sixth embodiment

FIG. 8 is an exemplary block diagram showing a device for unlocking a screen in the sixth embodiment of the present disclosure. This device comprises a first detection unit 81, a first comparison unit 82 and an unlock unit 83.

The first detection unit 81 is configured to detect an entering operation performed by a user in an entering location of an unlock password, and supply the first comparison unit 82 with all characters in the entering location of the unlock password every time it is detected that the entering operation is once performed by the user in the entering location of the unlock password.

The first comparison unit 82 comprises an encryption module 821 and a first comparison module 822.

The encryption module 821 is configured to encrypt all characters in the entering location of the unlock password using a preset encryption algorithm so as to obtain a first ciphertext, and supply the first comparison module 822 with the first ciphertext.

The first comparison module 822 is configured to perform a comparison to determine whether the first ciphertext matches a second ciphertext, determine that all the characters in the entering location of the unlock password match the password preset by the user if the first ciphertext matches the second ciphertext, and trigger the unlock unit 83 to perform an operation. The second ciphertext herein refers to a ciphertext obtained by encrypting the password preset by the user using the preset encryption algorithm.

The unlock unit 83 is configured to unlock the screen.

Accordingly, the sixth embodiment based on the fifth embodiment further encrypts the password preset by the user using a preset encryption algorithm so as to obtain the second ciphertext, and furthermore, every time it is detected that an entering operation is once performed by the user in the entering location of the unlock password, all the characters in the entering location of the unlock password are encrypted using the preset encryption algorithm so as to obtain the first ciphertext. Then the screen will be unlocked if the first ciphertext matches the second ciphertext, and thus the safety of password may be further improved.

### The seventh embodiment

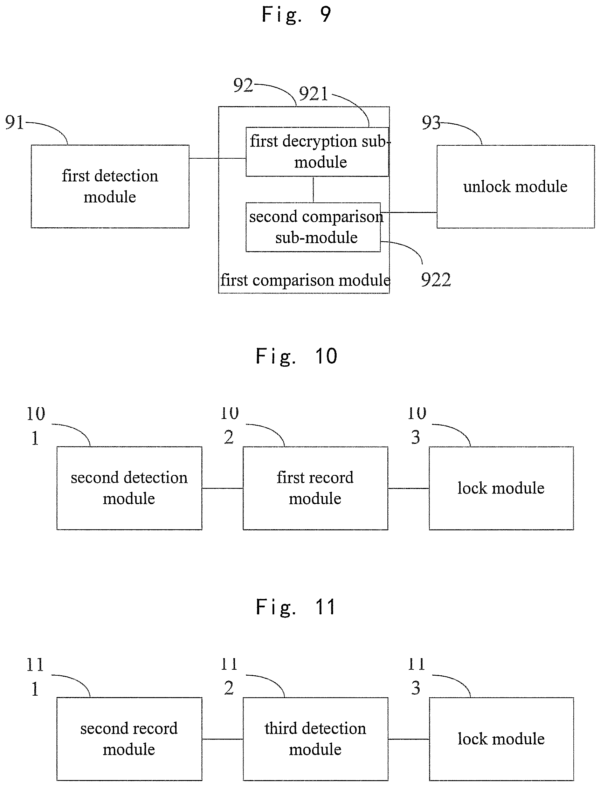

FIG. 9 is an exemplary block diagram showing a device for unlocking a screen in the seventh embodiment of the present disclosure. This device comprises a first detection unit 91, a first comparison unit 92 and an unlock unit 93.

The first detection unit 92 is configured to detect an entering operation performed by a user in an entering location of an unlock password, and supply the first comparison unit 92 with all characters in the entering location of the unlock password every time it is detected that the entering operation is once performed by the user in the entering location of the unlock password.

The first comparison unit 92 comprises a first decryption module 921 and a second comparison module 922.

The first decryption module 921 is configured to decrypt a ciphertext stored in advance using a preset encryption algorithm every time the first detection unit 91 detects that the entering operation is once performed by the user in the entering location of the unlock password, and supply the second comparison module 922 with the decryption result. The ciphertext stored in advance herein is obtained by encrypting the password preset by the user using the preset encryption algorithm.

The second comparison module 922 is configured to perform a comparison to determine whether all characters in the entering location of the unlock password match the decryption result, determine that all the characters in the entering location of the unlock password match the password preset by the user if it is determined that all the characters in the entering location of the unlock password match the decryption result, and trigger the unlock unit 93 to perform an operation.

The unlock unit 93 is configured to unlock the screen.

Accordingly, the present seventh embodiment based on the fifth embodiment further encrypts the password preset by the user in advance using the preset encryption algorithm so as to obtain and store a ciphertext, and furthermore, the stored ciphertext is decrypted using the preset encryption algorithm every time it is detected that the entering operation is once performed by the user in the entering location of the unlock password. Then the screen will be unlocked if all the characters in the entering location of the unlock password match the decryption result, and thus the safety of password may be further improved.

### The eighth embodiment

In such a case that an unlock event is provided for user, for example, if an "UNLOCK" button is provided on screen, a password entering error may be counted once when a user clicks the "UNLOCK" button and the characters entered by the user fail to match the preset password. However, such an embodiment cannot be implemented if any unlock event is not provided for the user.

On the basis of the fifth to seventh embodiments described above, the eighth embodiment of the present disclosure may provide some parts which may be further included in the fifth to seventh embodiments.

Alternatively, as shown in Fig. 10, the device according to the fifth to seventh embodiments mentioned above may further comprise a second detection unit 101, a first record unit 102 and a lock unit 103.

The second detection unit 101 is configured to detect whether any entered characters have been deleted by a user between his/her two entering operations, and trigger the first record unit 102 to perform an operation if it is detected that the entered characters have been deleted by the user.

The first record unit 102 is configured to add a total number of times the password is entered incorrectly by one, and supply the lock unit 103 with the total number of times the password is entered incorrectly.

The lock unit 103 is configured to determine whether the total number of times the password is entered incorrectly reaches a preset maximum number of times, and lock the terminal if the total number of times the password is entered incorrectly reaches the preset maximum number of times.

Accordingly, in this alternative embodiment, if any entered characters have been deleted by a user between his/her two entering operations, regardless of how many times the deleting operations are performed, the deletion operations will be considered as a case that the number of times the password is entered incorrectly is one. Still taking the unlock interface shown in Fig. 2 for an example, assuming the length of password preset by user is 6 digits, a user may delete one or more entered character(s) and re-enter new one(s) if the screen is not unlocked after 6-digit characters are entered. For example, the user may delete 3 characters and then re-enter the 4th to 6th characters, and such a deleting operation will be considered as a case that the number of times the password is entered incorrectly is one. As another example, the user may delete 6 characters and then re-enter the 1st to 6th characters, and such a deleting operation will also be considered as a case that the number of times the password is entered incorrectly is one.

As another alternative embodiment shown in Fig. 11, the device according to the fifth to seventh embodiments mentioned above may further comprise a second record unit 111, a third detection unit 112 and a lock unit 113.

The second record unit 111 is configured to add a total number of times of the entering operation of the user by one every time the first detection unit detects that an entering operation is once performed by the user in the entering location of the unlock password, and supply the third detection unit 112 with the total number of times of the entering operation of the user.

The third detection unit 112 is configured to detect whether the total number of times of the user's entering operations reaches a preset maximum number of times, and trigger the lock unit 113 to perform an operation if the total number of times of the user's entering operations reaches the preset maximum number of times.

The lock unit 113 is configured to lock the terminal.

Accordingly, in this alternative embodiment, the maximum number of times is set in advance and the terminal will be locked if the total number of times of the entering operation of the user reaches the maximum number of times. That is, the total number of times of the entering operation of the user may be added by one every time one character is entered by the user. Taking the unlock interface shown in Fig. 2 for an example, assuming that the 6-digit characters in the unlock password entering frame shown in Fig. 2 consist of characters which are re-entered by a user after other 6-digit characters are entered by the user for the first time without unlocking the screen and then are deleted. In such a case, the total number of times of the entering operation of the user may be 12.

The maximum number of times may be preset arbitrarily. Alternatively, the maximum number of times may be preset to be equal to a value obtained by subtracting one from an integral multiple of a maximum specified password length. Taking the android OS of smart phone for an example, the specified length of password ranges from 4 to 17 digits, that is, a user may set a password containing 4 to 17 characters. Thus, the maximum specified password length is 17, then the maximum number of times mentioned above may be set to 50, and the terminal may be locked when the total number of times of the entering operation of the user reaches 50.

### The ninth embodiment.

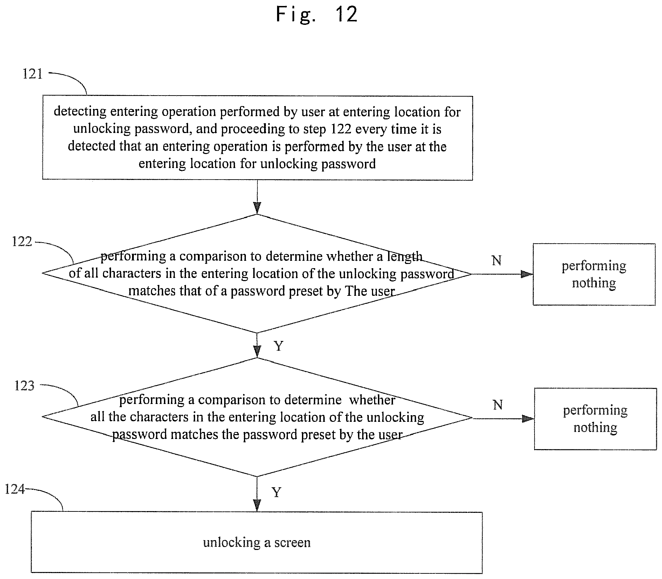

FIG. 12 is an exemplary flow chart showing a method for unlocking a screen in the ninth embodiment of the present disclosure. The method comprises the following steps.

Step 121: detecting an entering operation performed by a user in an entering location of an unlock password, and proceeding to step 122 every time the entering operation is detected being once performed by the user in the entering location of the unlock password.

Step 122: performing a comparison to determine whether a length of all characters in the entering location of the unlock password matches a length of a password preset by the user, and proceeding to step 123 if it is determined that the length of all characters in the entering location of the unlock password matches the length of the password preset by the user, otherwise performing nothing.

As an alternative example, in order to improve the safety of the length of password preset by the user, the length of password preset by the user may be encrypted using a preset encryption algorithm so as to obtain a ciphertext and store the same subsequently. In such a case, it is required firstly to decrypt the stored ciphertext using the preset encryption algorithm, and then a comparison is performed to determine whether the length of all the characters in the entering location of the unlock password matches the decryption result. If they match, it is determined that the length of all the characters in the entering location of the unlock password matches the length of the password preset by the user.

Step 123: performing a comparison to determine whether all the characters in the entering location of the unlock password matches the password preset by the user, and proceeding to step 124 if all the characters in the entering location of the unlock password matches the password preset by the user, otherwise performing nothing.

As an alternative example, in order to improve the safety of the password preset by the user, the password preset by the user may be encrypted using a preset encryption algorithm so as to obtain a second ciphertext. In such a case, when step 123 is performed, it is required firstly to encrypt all the characters in the entering location of the unlock password using the preset encryption algorithm so as to obtain a first ciphertext, and then it is determined by comparison whether the first ciphertext matches the second ciphertext. If the first ciphertext matches the second ciphertext, it is determined that all the characters in the entering location of the unlock password match the password preset by the user.

As another alternative example, the password preset by the user is also encrypted using a preset encryption algorithm so as to obtain a ciphertext and store the same. In such a case, when step 123 is performed, it is required firstly to decrypt the stored ciphertext using the preset encryption algorithm, and then it is determined by comparison whether all the characters in the entering location of the unlock password match the decryption result. If all the characters in the entering location of the unlock password match the decryption result, it is determined that all the characters in the entering location for unlock password match the password preset by the user.

Step 124: unlocking the screen.

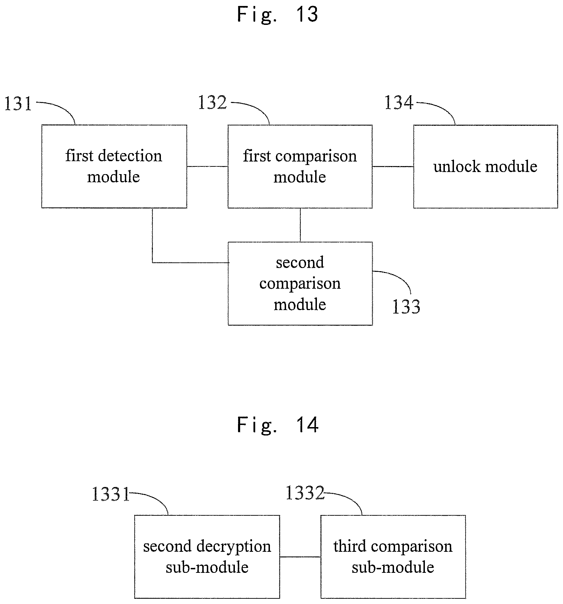

FIG. 13 is an exemplary block diagram showing a device for unlocking a screen in the ninth embodiment of the present disclosure. This device comprises a first detection unit 131, a first comparison unit 132, a second comparison unit 133 and an unlock unit 134.

The first detection unit 131 is configured to detect an entering operation performed by a user in an entering location of an unlock password, and supply the first and second comparison units 132 and 133 with all characters in the entering location of the unlock password every time the entering operation is detected being once performed by the user in the entering location of the unlock password.

The second comparison unit 133 is configured to perform a comparison to determine whether a length of all the characters in the entering location of the unlock password supplied by the first detection unit 131 matches a length of the password preset by user every time the first detection unit 131 detects that the entering operation is once performed by the user in the entering location of the unlock password, and trigger the first comparison unit 132 to perform an operation when the length of all the characters in the entering location of the unlock password matches the length of the password preset by the user.

The first comparison unit 132 is configured to perform a comparison to determine whether all the characters in the entering location of the unlock password match the password preset by the user, and trigger the unlock unit 134 to perform an operation when all the characters in the entering location of the unlock password match the password preset by the user.

The unlock unit 134 is configured to unlock the screen.

The first comparison unit 132 in the ninth embodiment may be implemented by two manners in terms of its internal structure, which correspond to the sixth and seventh embodiments mentioned above, respectively. Thus, the repetitive description thereof will be omitted.

Alternatively, as shown in Fig. 14, the second comparison unit 133 comprises a second decryption module 1331 and a third comparison module 1332.

The second decryption module 1331 is configured to decrypt the stored ciphertext using a preset encryption algorithm every time it is detected that the entering operation is once performed by the user in the entering location of the unlock password, and supply the third comparison module 1332 with the decryption result. The stored ciphertext herein is obtained by encrypting the length of password preset by the user using the preset encryption algorithm.

The third comparison module 1332 is configured to perform a comparison to determine whether a length of all the characters in the entering location of the unlock password matches the decryption result, determine that the length of all the characters in the entering location of the unlock password matches the length of the password preset by the user if the length of all the characters in the entering location of the unlock password matches the decryption result, and trigger the first comparison unit 132 to perform an operation.

The device for unlocking a screen in the ninth embodiment may also comprise a similar device as that shown in Figs. 10 and 11. Thus repetitive description thereof will be omitted.

Accordingly, in the method and device of the ninth embodiment, it is determined by a manner of comparison whether all the characters in the entering location of the unlock password match the password preset by the user only when the length of all the characters in the entering location of the unlock password matches the length of the password preset by the user, rather than every time an entering operation is performed by the user, and thus part of comparison operations may be saved.

The present disclosure also provides a terminal, comprising:
a touch screen;
one or more processors;
a memory; and
one or more modules, stored in the memory and configured to be performed by the one or more processors, wherein the one or more modules have functions of:
   detecting an entering operation performed by a user in an entering location of the unlock password; and
   performing a comparison to determine whether all characters in the entering location of the unlock password match a password preset by the user every time the entering operation is detected being once performed by the user in the entering location of the unlock password; and unlocking the screen if all the characters of the entering location of the unlock password match the password preset by the user.

Alternatively, every time the entering operation is detected being once performed by the user in the entering location of the unlock password, a comparison is performed to determine whether a length of all the characters in the entering location of the unlock password matches a length of the password preset by the user; and another comparison is further performed to determine whether all the characters in the entering location of the unlock password match the password preset by the user if the length of all the characters in the entering location of the unlock password matches that of the password preset by user.

Alternatively, the performing a comparison to determine whether all the characters in the entering location of the unlock password match the password preset by the user comprises:
encrypting all the characters in the entering location of the unlock password using a preset encryption algorithm so as to obtain a first ciphertext;
performing a comparison to determine whether the first ciphertext matches a second ciphertext stored in advance, the second ciphertext being obtained by encrypting the password preset by the user using the preset encryption algorithm; and
determining that all the characters in the entering location of the unlock password match the password preset by the user if the first ciphertext matches the second ciphertext.

Alternatively, the performing a comparison to determine whether all the characters in the entering location of the unlock password match the password preset by the user comprises:
decrypting a ciphertext stored in advance using a preset encryption algorithm to obtain a decryption result, the ciphertext stored in advance being obtained by encrypting the password preset by user using the preset encryption algorithm;
performing a comparison to determine whether all the characters in the entering location of the unlock password match the decryption result; and
determining that all the characters in the entering location of the unlock password match the password preset by the user if all the characters in the entering location of the unlock password match the decryption result.

Alternatively, the performing a comparison to determine whether the length of all the characters in the entering location of the unlock password matches the length of the password preset by the user comprises:
decrypting a ciphertext stored in advance using a preset encryption algorithm to obtain a decryption result, the ciphertext stored in advance being obtained by encrypting the length of the password preset by the user using the preset encryption algorithm;
performing a comparison to determine whether the length of all the characters in the entering location of the unlock password matches the decryption result; and
determining that the length of all the characters in the entering location of the unlock password matches the length of the password preset by the user if the length of all the characters in the entering location of the unlock password matches the decryption result.

Alternatively, it is further comprised that:
detecting whether entered characters have been deleted by the user between two entering operations;
adding a total number of times the password is entered incorrectly by one if it is detected that the entered characters have been deleted by the user between two entering operations;
detecting whether the total number of times the password is entered incorrectly reaches the preset maximum number of times; and
locking a terminal if the total number of times the password is entered incorrectly reaches the preset maximum number of times.

Alternatively, it is further comprised that:
adding a total number of times of the entering operation of the user by one every time the entering operation is detected being once performed by the user in the entering location of the unlock password;
performing a comparison to determine whether the total number of times of the entering operation of the user reaches the preset maximum number of times; and
locking a terminal if the total number of times of the entering operation of the user reaches the preset maximum number of times.

Furthermore, the preset maximum number of times is equal to a value obtained by subtracting one from an integral multiple of a maximum specified password length.

## Claims

1. A method for unlocking a screen of a terminal, the method comprising:
detecting (121) an entering operation performed by a user in an entering location of an unlock password;
decrypting a ciphertext stored in advance using a preset encryption algorithm, the ciphertext stored in advance being obtained by encrypting the length of the password preset by the user using the preset encryption algorithm;
performing (122) a comparison to determine whether the length of all the characters in the entering location of the unlock password matches the length of the password preset by the user; and
if the length of all the characters in the entering location of the unlock password matches the length of the password preset by the user, performing a comparison (123) to determine whether all characters in the entering location of the unlock password match a password preset by the user; and
unlocking (124) the screen if all the characters in the entering location of the unlock password match the password preset by the user.

2. The method of claim 1, **characterized in that**, the performing a comparison to determine whether all the characters in the entering location of the unlock password match the password preset by the user comprises:
encrypting all the characters in the entering location of the unlock password using a first preset encryption algorithm so as to obtain a first ciphertext;
performing a comparison to determine whether the first ciphertext matches a second ciphertext stored in advance, the second ciphertext being obtained by encryption of the password preset by the user using the first preset encryption algorithm; and
determining all the characters in the entering location of the unlock password match the password preset by the user if the first ciphertext matches the second ciphertext.

3. The method of claim 1, **characterized in that**, the step of performing a comparison to determine whether all the characters in the entering location of the unlock password match the password preset by the user comprises:
decrypting a first ciphertext stored in advance using a first preset encryption algorithm, the first ciphertext stored in advance being obtained by encrypting the password preset by the user using the first preset encryption algorithm;
performing a comparison to determine whether all the characters in the entering location of the unlock password match a first decryption result; and
determining all the characters in the entering location of the unlock password match the password preset by the user, if all the characters in the entering location of the unlock password match the first decryption result.

4. The method of claim 1, **characterized in that**, the method further comprises:
detecting whether entered characters have been deleted by the user between two entering operations;
adding a total number of times the password is entered incorrectly by one if it is detected that the entered characters have been deleted by the user between two entering operations;
detecting whether the total number of times the password is entered incorrectly reaches a preset maximum number of times; and
locking the terminal if the total number of times the password is entered incorrectly reaches the preset maximum number of times.

5. The method of claim 1, **characterized in that**, the method further comprises:
adding a total number of times of the user's entering operation by one every time the entering operation is detected being once performed by the user in the entering location of the unlock password;
detecting whether the total number of times of the entering operation of the user reaches a preset maximum number of times; and
locking the terminal if the total number of times of the entering operation of the user reaches the preset maximum number of times.

6. The method of claim 5, **characterized in that**, the preset maximum number of times is equal to a value obtained by subtracting one from an integral multiple of a maximum specified password length.

7. A device for unlocking a screen of a terminal, **characterized in that**, the device comprises:
a first detection unit (131) configured to detect an entering operation performed by a user in an entering location of an unlock password, and supply a first comparison unit (132) with all characters in the entering location of the unlock password every time the entering operation is detected;
a first decryption module (1335) configured to decrypt a ciphertext stored in advance using a preset encryption algorithm, wherein the ciphertext stored in advance is obtained by encrypting the length of the password preset by the user using the preset encryption algorithm; and
a second comparison unit (1332) configured to perform a comparison to determine whether the length of all the characters in the entering location of the unlock password supplied by the first detection unit matches the length of the password preset by the user if the length of all the characters in the entering location of the unlock password matches the decryption result, and trigger the first comparison unit to determine whether all the characters in the entering location of the unlock password match a password preset by the user, and trigger an unlock unit (134) to unlock the screen when all the characters in the entering location of the unlock password match a password preset by the user.

8. The device of claim 7, **characterized in that**, the first comparison unit comprises:
an encrypting module (821) configured to encrypt all the characters in the entering location of the unlock password using a first preset encryption algorithm so as to obtain a first ciphertext and supply a first comparison module (822) with the first ciphertext; and
the first comparison module configured to perform a comparison to determine whether the first ciphertext matches a second ciphertext stored in advance, determine that all the characters in the entering location of the unlock password match the password preset by the user if the first ciphertext matches the second ciphertext, and trigger the unlock unit to perform an operation, wherein the second ciphertext is obtained by encrypting the password preset by the user using the first preset encryption algorithm.

9. The device of claim 7, **characterized in that**, the first comparison unit (92) comprises:
a second decrypting module (921) configured to decrypt a first ciphertext stored in advance using a preset first encryption algorithm, and supply a first comparison module (922) with a first decryption result, wherein, the first ciphertext stored in advance is obtained by encrypting the password preset by the user using the first preset encryption algorithm; and
the first comparison module configured to perform a comparison to determine whether all the characters in the entering location of the unlock password match the first decryption result, determine that all the characters in the entering location for unlock password match the password preset by the user when all the characters in the entering location of the unlock password match the first decryption result, and trigger the unlock unit to perform an operation.

10. The device of claim 7, **characterized in that**, the device further comprises:
a second detection unit (101) configured to detect whether entered characters have been deleted by the user between two entering operations, and trigger a first record unit (102) to perform an operation when it is detected that the entered characters have been deleted by the user between two entering operations;
the first record unit configured to add a total number of times the password is entered incorrectly by one, and supply a lock unit (103) with the total number of times the password is entered incorrectly; and
the lock unit configured to detect whether the total number of times the password is entered incorrectly reaches the preset maximum number of times, and lock the terminal if the total number of times the password is entered incorrectly reaches the preset maximum number of times.

11. The device of claim 7, **characterized in that**, the device further comprises:
a second record unit (111) configured to add a total number of times of the entering operation of the user by one every time the first detection unit detects that the entering operation is once performed by the user in the entering location of the unlock password, and supply a second detection unit (112) with the total number of times of the entering operation of the user;
the second detection unit configured to detect whether the total number of times of the entering operation of the user reaches the preset maximum number of times, and trigger a lock unit (113) to perform an operation if the total number of times of the entering operation of the user reaches the preset maximum number of times; and
the lock unit configured to lock the terminal.

12. The device of claim 11, **characterized in that**, the preset maximum number of times is equal to a value obtained by subtracting one from an integral multiple of a maximum specified password length.

13. A terminal, **characterized in that**, the terminal comprises:
a touch screen;
one or more processors;
a memory; and
one or more modules stored in the memory and configured to be executed by the one or more processors, wherein the one or more modules have functions of:
detecting (121) an entering operation performed by a user in an entering location of an unlock password; and
decrypting a ciphertext stored in advance using a preset encryption algorithm, the ciphertext stored in advance being obtained by encrypting the length of the password preset by the user using the preset encryption algorithm;
performing a comparison (122) to determine whether the length of all the characters in the entering location of the unlock password matches the length of the password preset by the user; and
if the length of all the characters in the entering location of the unlock password matches the length of the password preset by the user, performing a comparison (123) to determine whether all characters in the entering location of the unlock password match a password preset by the user; and unlocking (124) the screen if all the characters in the entering location of the unlock password match the password preset by the user.

## Patentansprüche

1. Verfahren zum Entsperren eines Bildschirms eines Endgerätes, wobei das Verfahren umfasst:
Detektieren (121) einer Eingabeoperation, die von einem Nutzer an einer Eingabeposition eines Entsperrpasswortes ausgeführt wird,
Entschlüsseln eines im Voraus gespeicherten Chiffriertextes unter Verwendung eines voreingestellten Verschlüsselungsalgorithmus, wobei der im Voraus gespeicherte Chiffriertext durch Verschlüsseln der Länge eines vom Nutzer voreingestellten Passwortes mittels des voreingestellten Verschlüsselungsalgorithmus erhalten wird,
Ausführen (122) eines Vergleichs, um zu bestimmen, ob die Länge aller Zeichen an der Eingabeposition des Entsperrpasswortes mit der Länge des vom Nutzer voreingestellten Passwortes übereinstimmt, und
wenn die Länge aller Zeichen an der Eingabeposition des Entsperrpasswortes mit der Länge des vom Nutzer voreingestellten Passwortes übereinstimmt, Ausführen eines Vergleichs (123), um zu bestimmen, ob alle Zeichen an der Eingabeposition des Entsperrpasswortes mit dem vom Nutzer voreingestellten Passwort übereinstimmen, und
Entsperren (124) des Bildschirms, wenn alle Zeichen an der Eingabeposition des Entsperrpasswortes mit dem vom Nutzer voreingestellten Passwort übereinstimmen.

2. Verfahren nach Anspruch 1, **dadurch gekennzeichnet, dass** das Ausführen eines Vergleichs, um zu bestimmen, ob alle Zeichen an der Eingabeposition des Entsperrpasswortes mit dem vom Nutzer voreingestellten Passwort übereinstimmen, umfasst:
Verschlüsseln aller Zeichen an der Eingabeposition des Entsperrpasswortes unter Verwendung eines ersten voreingestellten Verschlüsselungsalgorithmus, um einen ersten Chiffriertext zu erhalten,
Ausführen eines Vergleichs, um zu bestimmen, ob der erste Chiffriertext mit einem zweiten im Voraus gespeicherten Chiffriertext übereinstimmt, wobei der zweite Chiffriertext durch Verschlüsselung des vom Nutzer voreingestellten Passwortes mittels des voreingestellten Verschlüsselungsalgorithmus erhalten wird, und
Bestimmen, dass alle Zeichen an der Eingabeposition des Entsperrpasswortes mit dem vom Nutzer voreingestellten Passwort übereinstimmen, wenn der erste Chiffriertext mit dem zweiten Chiffriertext übereinstimmt.

3. Verfahren nach Anspruch 1, **dadurch gekennzeichnet, dass** der Schritt des Ausführens eines Vergleichs, um zu bestimmen, ob alle Zeichen an der Eingabeposition des Entsperrpasswortes mit dem vom Nutzer voreingestellten Passwort übereinstimmen, umfasst:
Entschlüsseln eines ersten im Voraus gespeicherten Chiffriertextes unter Verwendung eines ersten voreingestellten Verschlüsselungsalgorithmus, wobei der erste im Voraus gespeicherte Chiffriertext durch Verschlüsseln des vom Nutzer voreingestellten Passwortes mittels des ersten voreingestellten Verschlüsselungsalgorithmus erhalten wird,
Ausführen eines Vergleichs, um zu bestimmen, ob alle Zeichen an der Eingabeposition des Entsperrpasswortes mit einem ersten Entschlüsselungsergebnis übereinstimmen, und
Bestimmen, dass alle Zeichen an der Eingabeposition des Entsperrpasswortes mit dem vom Nutzer voreingestellten Passwort übereinstimmen, wenn alle Zeichen an der Eingabeposition des Entsperrpasswortes mit dem ersten Entschlüsselungsergebnis übereinstimmen.

4. Verfahren nach Anspruch 1, **dadurch gekennzeichnet, dass** das Verfahren ferner umfasst:
Detektieren, ob eingegebene Zeichen vom Nutzer zwischen zwei Eingabeoperationen gelöscht wurden,
Inkrementieren einer Gesamtanzahl von Malen, die das Passwort falsch eingegeben wurde, um eins, wenn detektiert wird, dass die eingegebenen Zeichen vom Nutzer zwischen zwei Eingabeoperationen gelöscht wurden,
Detektieren, ob die Gesamtanzahl von Malen, die das Passwort falsch eingegeben wurde, eine voreingestellte maximale Anzahl von Malen erreicht, und
Sperren des Endgerätes, wenn die Gesamtanzahl von Malen, die das Passwort falsch eingegeben wurde, die voreingestellte maximale Anzahl von Malen erreicht.

5. Verfahren nach Anspruch 1, **dadurch gekennzeichnet, dass** das Verfahren ferner umfasst:
Inkrementieren einer Gesamtanzahl von Malen der Eingabeoperationen des Nutzers um eins jedes Mal, wenn detektiert wird, dass die Eingabeoperation einmal vom Nutzer an der Eingabeposition des Entsperrpasswortes ausgeführt wird,
Detektieren, ob die Gesamtanzahl von Malen der Eingabeoperationen des Nutzers eine voreingestellte maximale Anzahl von Malen erreicht, und
Sperren des Endgerätes, wenn die Gesamtanzahl von Malen der Eingabeoperationen des Nutzers die voreingestellte maximale Anzahl von Malen erreicht.

6. Verfahren nach Anspruch 5, **dadurch gekennzeichnet, dass** die voreingestellte maximale Anzahl von Malen gleich einem Wert ist, der durch Subtrahieren von eins von einem ganzzahligen Vielfachen einer maximalen spezifizierten Passwortlänge erhalten wird.

7. Vorrichtung zum Entsperren eines Bildschirms eines Endgerätes, **dadurch gekennzeichnet, dass** die Vorrichtung umfasst:
eine erste Detektionseinheit (131), die dafür konfiguriert ist, eine Eingabeoperation zu detektieren, die von einem Nutzer an einer Eingabeposition eines Entsperrpasswortes ausgeführt wird, und an eine erste Vergleichseinheit (132) alle Zeichen an der Eingabeposition des Entsperrpasswortes jedes Mal zu übermitteln, wenn die Eingabeoperation detektiert wird,
ein erstes Entschlüsselungsmodul (1335), die dafür konfiguriert ist, einen im Voraus gespeicherten Chiffriertext unter Verwendung eines voreingestellten Verschlüsselungsalgorithmus zu entschlüsseln, wobei der im Voraus gespeicherte Chiffriertext durch Verschlüsseln der Länge eines vom Nutzer voreingestellten Passwortes mittels des voreingestellten Verschlüsselungsalgorithmus erhalten wird, und
einen zweite Vergleichseinheit (1332), die dafür konfiguriert ist, einen Vergleich auszuführen, um zu bestimmen, ob die Länge aller Zeichen an der Eingabeposition des Entsperrpasswortes, die durch die erste Detektionseinheit übermittelt werden, mit der Länge des vom Nutzer voreingestellten Passwortes übereinstimmt, wenn die Länge aller Zeichen an der Eingabeposition des Entsperrpasswortes mit dem Entschlüsselungsergebnis übereinstimmt, und Auslösen der ersten Vergleichseinheit, um zu bestimmen, ob alle Zeichen an der Eingabeposition des Entsperrpasswortes mit einem dem vom Nutzer voreingestellten Passwort übereinstimmen, und Auslösen einer Entsperreinheit (134), um den Bildschirm zu entsperren, wenn alle Zeichen an der Eingabeposition des Entsperrpasswortes mit dem vom Nutzer voreingestellten Passwort übereinstimmen.

8. Vorrichtung nach Anspruch 7, **dadurch gekennzeichnet, dass** die erste Vergleichseinheit umfasst:
ein Verschlüsselungsmodul (821), das dafür konfiguriert ist, alle Zeichen an der Eingabeposition des Entsperrpasswortes unter Verwendung eines ersten voreingestellten Verschlüsselungsalgorithmus zu verschlüsseln, um einen ersten Chiffriertext zu erhalten, und den ersten Chiffriertext an ein erstes Vergleichsmodul (822) zu übermitteln, und
wobei das erste Vergleichsmodul dafür konfiguriert ist, einen Vergleich auszuführen, um zu bestimmen, ob der erste Chiffriertext mit einem zweiten im Voraus gespeicherten Chiffriertext übereinstimmt, zu bestimmen, dass alle Zeichen an der Eingabeposition des Entsperrpasswortes mit dem vom Nutzer voreingestellten Passwort übereinstimmen, wenn der erste Chiffriertext mit dem zweiten Chiffriertext übereinstimmt, und die Entsperreinheit auszulösen, um eine Operation auszuführen, wobei der zweite Chiffriertext durch Verschlüsseln des vom Nutzer voreingestellten Passwortes mittels des ersten voreingestellten Verschlüsselungsalgorithmus erhalten wird.

9. Vorrichtung nach Anspruch 7, **dadurch gekennzeichnet, dass** die erste Vergleichseinheit (92) umfasst:
ein zweites Entschlüsselungsmodul (921), das dafür konfiguriert ist, einen ersten im Voraus gespeicherten Chiffriertext unter Verwendung eines voreingestellten ersten Verschlüsselungsalgorithmus zu entschlüsseln, und an ein erstes Vergleichsmodul (922) ein erstes Entschlüsselungsergebnis zu übermitteln, wobei der erste im Voraus gespeicherte Chiffriertext durch Verschlüsseln des vom Nutzer voreingestellten Passwortes mittels des ersten voreingestellten Verschlüsselungsalgorithmus erhalten wird, und das erste Vergleichsmodul dafür konfiguriert ist, einen Vergleich auszuführen, um zu bestimmen, ob alle Zeichen an der Eingabeposition des Entsperrpasswortes mit dem ersten Entschlüsselungsergebnis übereinstimmen, zu bestimmen, dass alle Zeichen an der Eingabeposition des Entsperrpasswortes mit dem vom Nutzer voreingestellten Passwort übereinstimmen, wenn alle Zeichen an der Eingabeposition des Entsperrpasswortes mit dem ersten Entschlüsselungsergebnis übereinstimmen, und die Entsperreinheit auszulösen, um eine Operation auszuführen.

10. Vorrichtung nach Anspruch 7, **dadurch gekennzeichnet, dass** die Vorrichtung ferner umfasst:
eine zweite Detektionseinheit (101), die dafür konfiguriert ist zu detektieren, ob eingegebene Zeichen vom Nutzer zwischen zwei Eingabeoperationen gelöscht wurden, und eine erste Aufzeichnungseinheit (102) auszulösen, um eine Operation auszuführen, wenn detektiert wird, dass die eingegebenen Zeichen vom Nutzer zwischen zwei Eingabeoperationen gelöscht wurden,
wobei die erste Aufzeichnungseinheit dafür konfiguriert ist, eine Gesamtanzahl von Malen, die das Passwort falsch eingegeben wurde, um eins zu inkrementieren, und an eine Sperreinheit (103) die Gesamtanzahl von Malen zu übermitteln, die das Passwort falsch eingegeben wurde, und
die Sperreinheit dafür konfiguriert ist zu detektieren, ob die Gesamtanzahl von Malen, die das Passwort falsch eingegeben wurde, die voreingestellte maximale Anzahl von Malen erreicht, und das Endgerät zu sperren, wenn die Gesamtanzahl von Malen, die das Passwort falsch eingegeben wurde, die voreingestellte maximale Anzahl von Malen erreicht.

11. Vorrichtung nach Anspruch 7, **dadurch gekennzeichnet, dass** die Vorrichtung ferner umfasst:
eine zweite Aufzeichnungseinheit (111), die dafür konfiguriert ist, eine Gesamtanzahl von Malen der Eingabeoperationen des Nutzers jedes Mal um eins zu inkrementieren, wenn die erste Detektionseinheit detektiert, dass die Eingabeoperation einmal durch den Nutzer an der Eingabeposition des Entsperrpasswortes ausgeführt wurde, und an eine zweite Detektionseinheit (112) die Gesamtanzahl von Malen der Eingabeoperationen des Nutzers zu übermitteln,
wobei die zweite Detektionseinheit dafür konfiguriert ist zu detektieren, ob die Gesamtanzahl von Malen der Eingabeoperationen des Nutzers die voreingestellte maximale Anzahl von Malen erreicht, und eine Sperreinheit (113) auszulösen, um eine Operation auszuführen, wenn die Gesamtanzahl von Malen der Eingabeoperationen des Nutzers die voreingestellte maximale Anzahl von Malen erreicht, und
die Sperreinheit dafür konfiguriert ist, das Endgerät zu sperren.

12. Vorrichtung nach Anspruch 11, **dadurch gekennzeichnet, dass** die voreingestellte maximale Anzahl von Malen gleich einem Wert ist, der durch Subtrahieren von eins von einem ganzzahligen Vielfachen einer maximalen spezifizierten Passwortlänge erhalten wird.

13. Endgerät, **dadurch gekennzeichnet, dass** das Endgerät umfasst:
einen Berührungsbildschirm,
einen oder mehrere Prozessoren,
einen Speicher, und
ein oder mehrere Module, die in dem Speicher gespeichert und dafür konfiguriert sind, durch den einen oder die mehreren Prozessoren ausgeführt zu werden, wobei das eine oder die mehreren Module die Funktionen haben:
Detektieren (121) einer Eingabeoperation, die von einem Nutzer an einer Eingabeposition eines Entsperrpasswortes ausgeführt wird, und
Entschlüsseln eines im Voraus gespeicherten Chiffriertextes unter Verwendung eines voreingestellten Verschlüsselungsalgorithmus, wobei der im Voraus gespeicherte Chiffriertext durch Verschlüsseln der Länge eines vom Nutzer voreingestellten Passwortes mittels des voreingestellten Verschlüsselungsalgorithmus erhalten wird,
Ausführen eines Vergleichs (122), um zu bestimmen, ob die Länge aller Zeichen an der Eingabeposition des Entsperrpasswortes mit der Länge des vom Nutzer voreingestellten Passwortes übereinstimmt, und
wenn die Länge aller Zeichen an der Eingabeposition des Entsperrpasswortes mit der Länge des vom Nutzer voreingestellten Passwortes übereinstimmt, Ausführen eines Vergleichs (123), um zu bestimmen, ob alle Zeichen an der Eingabeposition des Entsperrpasswortes mit dem vom Nutzer voreingestellten Passwort übereinstimmen, und
Entsperren (124) des Bildschirms, wenn alle Zeichen an der Eingabeposition des Entsperrpasswortes mit dem vom Nutzer voreingestellten Passwort übereinstimmen.

## Revendications

1. Procédé pour déverrouiller un écran d'un terminal, le procédé comprenant :
la détection (121) d'une opération d'entrée effectuée par un utilisateur dans un emplacement d'entrée d'un mot de passe de déverrouillage ;
le déchiffrement d'un texte chiffré stocké au préalable en utilisant un algorithme de chiffrement prédéfini, le texte chiffré stocké au préalable étant obtenu en chiffrant la longueur du mot de passe prédéfini par l'utilisateur en utilisant l'algorithme de chiffrement prédéfini ;
l'exécution (122) d'une comparaison pour déterminer si la longueur de tous les caractères dans l'emplacement d'entrée du mot de passe de déverrouillage correspond à la longueur du mot de passe prédéfini par l'utilisateur ; et
si la longueur de tous les caractères dans l'emplacement d'entrée du mot de passe de déverrouillage correspond à la longueur du mot de passe prédéfini par l'utilisateur, l'exécution d'une comparaison (123) pour déterminer si tous les caractères dans l'emplacement d'entrée du mot de passe de déverrouillage correspondent à un mot de passe prédéfini par l'utilisateur ; et
le déverrouillage (124) de l'écran si tous les caractères dans l'emplacement d'entrée du mot de passe de déverrouillage correspondent au mot de passe prédéfini par l'utilisateur.

2. Procédé selon la revendication 1, **caractérisé en ce que**, l'exécution d'une comparaison pour déterminer si tous les caractères dans l'emplacement d'entrée du mot de passe de déverrouillage correspondent au mot de passe prédéfini par l'utilisateur comprend :
le chiffrement de tous les caractères dans l'emplacement d'entrée du mot de passe de déverrouillage en utilisant un premier algorithme de chiffrement prédéfini afin d'obtenir un premier texte chiffré ;
l'exécution d'une comparaison pour déterminer si le premier texte chiffré correspond à un second texte chiffré stocké au préalable, le second texte chiffré étant obtenu par chiffrement du mot de passe prédéfini par l'utilisateur en utilisant le premier algorithme de chiffrement prédéfini ; et
la détermination que tous les caractères dans l'emplacement d'entrée du mot de passe de déverrouillage correspondent au mot de passe prédéfini par l'utilisateur si le premier texte chiffré correspond au second texte chiffré.

3. Procédé selon la revendication 1, **caractérisé en ce que**, l'étape d'exécution d'une comparaison pour déterminer si tous les caractères dans l'emplacement d'entrée du mot de passe de déverrouillage correspondent au mot de passe prédéfini par l'utilisateur comprend :
le déchiffrement d'un premier texte chiffré stocké au préalable en utilisant un premier algorithme de chiffrement prédéfini, le premier texte chiffré stocké au préalable étant obtenu en chiffrant le mot de passe prédéfini par l'utilisateur en utilisant le premier algorithme de chiffrement prédéfini ;
l'exécution d'une comparaison pour déterminer si tous les caractères dans l'emplacement d'entrée du mot de passe de déverrouillage correspondent à un premier résultat de déchiffrement ; et
la détermination que tous les caractères dans l'emplacement d'entrée du mot de passe de déverrouillage correspondent au mot de passe prédéfini par l'utilisateur, si tous les caractères dans l'emplacement d'entrée du mot de passe de déverrouillage correspondent au premier résultat de déchiffrement.

4. Procédé selon la revendication 1, **caractérisé en ce que**, le procédé comprend en outre :
la détection de si des caractères entrés ont été supprimés par l'utilisateur entre deux opérations d'entrée ;
l'ajout à un nombre total de fois où le mot de passe est entré incorrectement de un s'il est détecté que les caractères entrés ont été supprimés par l'utilisateur entre deux opérations d'entrée ;
la détection de si le nombre total de fois où le mot de passe est entré incorrectement atteint un nombre maximum de fois prédéfini ; et
le verrouillage du terminal si le nombre total de fois où le mot de passe est entré incorrectement atteint le nombre maximum de fois prédéfini.

5. Procédé selon la revendication 1, **caractérisé en ce que**, le procédé comprend en outre :
l'ajout à un nombre total de fois de l'opération d'entrée de l'utilisateur de un chaque fois que l'opération d'entrée est détectée être effectuée une fois par l'utilisateur dans l'emplacement d'entrée du mot de passe de déverrouillage ;
la détection de si le nombre total de fois de l'opération d'entrée de l'utilisateur atteint un nombre maximum de fois prédéfini ; et
le verrouillage du terminal si le nombre total de fois de l'opération d'entrée de l'utilisateur atteint le nombre maximum de fois prédéfini.

6. Procédé selon la revendication 5, **caractérisé en ce que**, le nombre maximum de fois prédéfini est égal à une valeur obtenue en soustrayant un d'un multiple entier d'une longueur de mot de passe maximale spécifiée.

7. Dispositif pour déverrouiller un écran d'un terminal, **caractérisé en ce que**, le dispositif comprend :
une première unité de détection (131) configurée pour détecter une opération d'entrée effectuée par un utilisateur dans un emplacement d'entrée d'un mot de passe de déverrouillage, et fournir à une première unité de comparaison (132) tous les caractères dans l'emplacement d'entrée du mot de passe de déverrouillage chaque fois que l'opération d'entrée est détectée ;
un premier module de déchiffrement (1335) configuré pour déchiffrer un texte chiffré stocké au préalable en utilisant un algorithme de chiffrement prédéfini, où le texte chiffré stocké au préalable est obtenu en chiffrant la longueur du mot de passe prédéfini par l'utilisateur en utilisant l'algorithme de chiffrement prédéfini ; et
une seconde unité de comparaison (1332) configurée pour effectuer une comparaison pour déterminer si la longueur de tous les caractères dans l'emplacement d'entrée du mot de passe de déverrouillage fournis par la première unité de détection correspond à la longueur du mot de passe prédéfini par l'utilisateur si la longueur de tous les caractères dans l'emplacement d'entrée du mot de passe de déverrouillage correspond au résultat de déchiffrement, et déclencher la première unité de comparaison pour déterminer si tous les caractères dans l'emplacement d'entrée du mot de passe de déverrouillage correspondent à un mot de passe prédéfini par l'utilisateur, et déclencher une unité de déverrouillage (134) pour déverrouiller l'écran lorsque tous les caractères dans l'emplacement d'entrée du mot de passe de déverrouillage correspondent à un mot de passe prédéfini par l'utilisateur.

8. Dispositif selon la revendication 7, **caractérisé en ce que**, la première unité de comparaison comprend :
un module de chiffrement (821) configuré pour chiffrer tous les caractères dans l'emplacement d'entrée du mot de passe de déverrouillage en utilisant un premier algorithme de chiffrement prédéfini afin d'obtenir un premier texte chiffré et fournir à un premier module de comparaison (822) le premier texte chiffré ; et
le premier module de comparaison configuré pour effectuer une comparaison pour déterminer si le premier texte chiffré correspond à un second texte chiffré stocké au préalable, déterminer que tous les caractères dans l'emplacement d'entrée du mot de passe de déverrouillage correspondent au mot de passe prédéfini par l'utilisateur si le premier texte chiffré correspond au second texte chiffré, et déclencher l'unité de déverrouillage pour effectuer une opération, où le second texte chiffré est obtenu en chiffrant le mot de passe prédéfini par l'utilisateur en utilisant le premier algorithme de chiffrement prédéfini.

9. Dispositif selon la revendication 7, **caractérisé en ce que**, la première unité de comparaison (92) comprend :
un second module de déchiffrement (921) configuré pour déchiffrer un premier texte chiffré stocké au préalable en utilisant un premier algorithme de chiffrement prédéfini, et fournir à un premier module de comparaison (922) un premier résultat de déchiffrement, où, le premier texte chiffré stocké au préalable est obtenu en chiffrant le mot de passe prédéfini par l'utilisateur en utilisant le premier algorithme de chiffrement prédéfini ; et
le premier module de comparaison configuré pour effectuer une comparaison pour déterminer si tous les caractères dans l'emplacement d'entrée du mot de passe de déverrouillage correspondent au premier résultat de déchiffrement, déterminer que tous les caractères dans l'emplacement d'entrée pour le mot de passe de déverrouillage correspondent au mot de passe prédéfini par l'utilisateur lorsque tous les caractères dans l'emplacement d'entrée du mot de passe de déverrouillage correspondent au premier résultat de déchiffrement, et déclencher l'unité de déverrouillage pour effectuer une opération.

10. Dispositif selon la revendication 7, **caractérisé en ce que**, le dispositif comprend en outre :
une seconde unité de détection (101) configurée pour détecter si des caractères entrés ont été supprimés par l'utilisateur entre deux opérations d'entrée, et déclencher une première unité d'enregistrement (102) pour effectuer une opération lorsqu'il est détecté que les caractères entrés ont été supprimés par l'utilisateur entre deux opérations d'entrée ;
la première unité d'enregistrement configurée pour ajouter à un nombre total de fois où le mot de passe est entré incorrectement un, et fournir à une unité de verrouillage (103) le nombre total de fois où le mot de passe est entré incorrectement ; et
l'unité de verrouillage configurée pour détecter si le nombre total de fois où le mot de passe est entré incorrectement atteint le nombre de fois maximum prédéfini, et verrouiller le terminal si le nombre total de fois où le mot de passe est entré incorrectement atteint le nombre de fois maximum prédéfini.

11. Dispositif selon la revendication 7, **caractérisé en ce que**, le dispositif comprend en outre :
une seconde unité d'enregistrement (111) configurée pour ajouter à un nombre total de fois de l'opération d'entrée de l'utilisateur un chaque fois que la première unité de détection détecte que l'opération d'entrée est effectuée une fois par l'utilisateur dans l'emplacement d'entrée du mot de passe de déverrouillage, et fournir à une seconde unité de détection (112) le nombre total de fois de l'opération d'entrée de l'utilisateur ;
la seconde unité de détection configurée pour détecter si le nombre total de fois de l'opération d'entrée de l'utilisateur atteint le nombre maximum de fois prédéfini, et déclencher une unité de verrouillage (113) pour effectuer une opération si le nombre total de fois de l'opération d'entrée de l'utilisateur atteint le nombre maximum de fois prédéfini ; et
l'unité de verrouillage configurée pour verrouiller le terminal.

12. Dispositif selon la revendication 11, **caractérisé en ce que**, le nombre maximum de fois prédéfini est égal à une valeur obtenue en soustrayant un d'un multiple entier d'une longueur de mot de passe maximale spécifiée.

13. Terminal, **caractérisé en ce que**, le terminal comprend :
un écran tactile ;
un ou plusieurs processeurs ;
une mémoire : et
un ou plusieurs modules stockés dans la mémoire et configurés pour être exécutés par les un ou plusieurs processeurs, où les un ou plusieurs modules ont des fonctions permettant de :
détecter (121) une opération d'entrée effectuée par un utilisateur dans un emplacement d'entrée d'un mot de passe de déverrouillage ; et
déchiffrer un texte chiffré stocké au préalable en utilisant un algorithme de chiffrement prédéfini, le texte chiffré stocké au préalable étant obtenu en chiffrant la longueur du mot de passe prédéfini par l'utilisateur en utilisant l'algorithme de chiffrement prédéfini ;
effectuer une comparaison (122) pour déterminer si la longueur de tous les caractères dans l'emplacement d'entrée du mot de passe de déverrouillage correspond à la longueur du mot de passe prédéfini par l'utilisateur ; et
si la longueur de tous les caractères dans l'emplacement d'entrée du mot de passe de déverrouillage correspond à la longueur du mot de passe prédéfini par l'utilisateur, effectuer une comparaison (123) pour déterminer si tous les caractères dans l'emplacement d'entrée du mot de passe de déverrouillage correspondent à un mot de passe prédéfini par l'utilisateur ; et déverrouiller (124) l'écran si tous les caractères dans l'emplacement d'entrée du mot de passe de déverrouillage correspondent au mot de passe prédéfini par l'utilisateur.
